(19) Europäisches Patentamt
European Patent Office
Office européen des brevets

(11) EP 2 902 887 A1

(12) EUROPEAN PATENT APPLICATION
published in accordance with Art. 153(4) EPC

(43) Date of publication:
05.08.2015 Bulletin 2015/32

(51) Int Cl.:
*G06F 3/041* (2006.01)

(21) Application number: 13841721.7

(86) International application number:
PCT/JP2013/073477

(22) Date of filing: 02.09.2013

(87) International publication number:
WO 2014/050440 (03.04.2014 Gazette 2014/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.09.2012 JP 2012213699

(71) Applicant: Toray Industries, Inc.
Tokyo 103-8666 (JP)

(72) Inventors:
• KAI, Nobuyasu
Otsu-shi
Shiga 520-8558 (JP)

• OI, Takashi
Otsu-shi
Shiga 520-8558 (JP)
• WATANABE, Osamu
Otsu-shi
Shiga 520-8558 (JP)

(74) Representative: Hoefer & Partner Patentanwälte
mbB
Pilgersheimer Straße 20
81543 München (DE)

(54) **TRANSPARENT CONDUCTIVE LAMINATE**

(57) A transparent conductive laminate comprising a substrate comprising a thermoplastic resin A, and a layer laminated on one surface of the substrate, the layer having at least carbon nanotubes and a thermoplastic resin B, wherein the transparent conductive laminate undergoes a surface resistance change ($VR_1$) of 8-fold or less during molding at a molding magnification of 2, and has a surface resistance, as measured after being molded at a molding magnification of 2, of $1.0 \times 10^5$ $\Omega/\square$ or less.

Provided is a transparent conductive laminate whose surface resistance change after molding (R) is reduced.

[Fig. 1]

**Description**

Technical Field

The present invention relates to a transparent conductive laminate, more particularly to a transparent conductive laminate whose surface resistance change after molding (R) is reduced.

Background Art

Transparent conductive laminates have been used in a wide variety of applications such as touch panels (e.g., resistive touch panels, capacitive touch panels), electronic paper, and digital signage. To exhibit conductivity, conductive materials such as indium tin oxide (hereinafter referred to as ITO), silver nanowires (hereinafter referred to as AgNWs), carbon nanotubes (hereinafter also referred to as CNTs), and conductive polymers have been used. In the above applications, the transparent conductive laminate has been used mostly on a flat or flexible substrate, and it has not been required to mold the transparent conductive laminate. Previously, CNTs suitable for a flexible substrate requiring flexibility have been studied, and Patent Document 1 discloses a transparent conductive laminate comprising CNTs with high elasticity as a conductive film.

In the future, however, touch panels that are not flat but three-dimensional will be required from the standpoint of operability and design. The ITO and AgNWs, which have previously been studied, have no flexibility, and it is expected that after molding, the occurrence of cracks in an ITO layer and rupture of AgNWs themselves will significantly increase the surface resistance to result in noncontinuity, which makes it impossible to maintain the function of a transparent conductive laminate. Accordingly, CNTs and conductive polymers, which have higher flexibility than before and advantageous in molding, have been studied to reduce the surface resistance change after molding (R). Patent Document 2 discloses a moldable conductive film with improved CNT dispersibility that is intended to be used for antistatic treatment to discharge static electricity produced in a molded product of synthetic resin to prevent dust accretion. Patent Document 3 discloses a moldable conductive film including a conductive polymer.

Prior Art Documents

Patent Documents

Patent Document 1: JP 2012-66580 A
Patent Document 2: JP 2006-35772 A
Patent Document 3: JP 2011-213843 A

Summary of the Invention

Problems to be Solved by the Invention

Unfortunately, the transparent conductive laminate according to the technique disclosed in Patent Document 1, while having high elasticity, does not exhibit conductivity after being molded due to rupture of CNTs and the occurrence of cracks in a transparent protective film. The molding conductive film including CNTs disclosed in Patent Document 2, which retains a surface resistance at or below a certain level after being molded but undergoes a great change in surface resistance, is difficult to use in touch panel applications. Furthermore, Patent Document 3, which discloses the use of a conductive polymer, is silent about the surface resistance change after molding (R), and it can be determined from the elongation at break that the conductivity has been lost at a molding magnification of 2 to 3.

Thus, in view of the above-described problems in the prior art, it is an object of the present invention to provide a transparent conductive laminate whose surface resistance change after molding (R) is reduced.

Means for Solving the Problems

To solve the problems described above, the transparent conductive laminate of the present invention has the following constitution.

A transparent conductive laminate comprising a substrate comprising a thermoplastic resin A, and a layer laminated on one surface of the substrate, the layer having at least carbon nanotubes and a thermoplastic resin B, wherein the transparent conductive laminate undergoes a surface resistance change ($VR_1$) of 8-fold or less during molding at a molding magnification of 2, and has a surface resistance ($R_1$), as measured after being molded at a molding magnification of 2, of $1.0 \times 10^5$ $\Omega/\square$ or less.

The transparent conductive laminate of the present invention preferably has a haze value, as measured after being molded at a molding magnification of 2, of 10% or less.

In the transparent conductive laminate of the present invention, the percentage of the mass of the thermoplastic resin B relative to the total mass of the thermoplastic resin B and the carbon nanotubes is preferably 10 to 99.5% by mass. In the transparent conductive laminate of the present invention, the thermoplastic resin B is preferably at least one selected from the group consisting of urethane resins, carbonate resins, ester resins, ether resins, acrylic resins, vinyl resins, and olefin resins.

In the transparent conductive laminate of the present invention, the thermoplastic resin A is preferably polymethyl methacrylate or cyclic olefin polymer. In the transparent conductive laminate of the present invention, the carbon nanotubes preferably has an average length of 2 to 7 $\mu$m.

In the transparent conductive laminate of the present invention, the layer laminated on the substrate comprising the thermoplastic resin A preferably has a thickness of 1 to 1,000 nm.

In the transparent conductive laminate of the present invention, the substrate comprising the thermoplastic resin A preferably has a thickness of 75 to 3,000 $\mu$m.

Effects of the Invention

According to the present invention, a transparent conductive laminate whose surface resistance change after molding (R) is reduced can be provided. By reducing the surface resistance change after molding (R), a touch panel display having a curved surface has little variation in surface resistance, and excellent activation properties can be obtained. For example, when the variation in surface resistance is wide, the precise location information of a position where a touch panel is touched is not recognized, but when the variation in surface resistance is little, the precise location information of a position where a touch panel is touched is recognized, and the touch panel can be used as a touch panel with excellent activation properties.

Brief Description of the Drawings

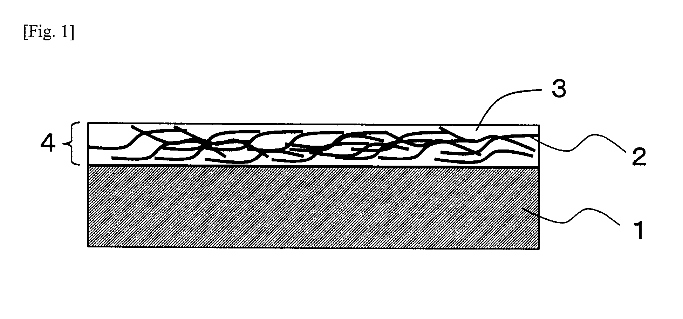

FIG. 1 is a schematic cross-sectional view illustrating the transparent conductive laminate of the present invention.

Mode for Carrying Out the Invention

FIG. 1 is a schematic cross-sectional view illustrating the transparent conductive laminate of the present invention. The transparent conductive laminate of the present invention comprises a substrate (1) comprising a thermoplastic resin A, and a layer (4) laminated on one surface of the substrate (1), the layer (4) having CNTs (2) and a thermoplastic resin B (3).

The transparent conductive laminate of the present invention is a transparent conductive laminate comprising a substrate comprising a thermoplastic resin A, and a layer laminated on one surface of the substrate, the layer having at least CNTs and a thermoplastic resin B, wherein the transparent conductive laminate undergoes a surface resistance change ($VR_1$) of 8-fold or less during molding at a molding magnification of 2, and has a surface resistance ($R_1$), as measured after being molded at a molding magnification of 2, of $1.0 \times 10^5$ $\Omega/\square$ or less.

As used herein, the surface resistance change ($VR_1$) of a transparent conductive laminate during molding at a molding magnification of 2 means a ratio of the surface resistance ($R_1$), as measured after being molded at a molding magnification of 2, of the transparent conductive laminate to its initial (pre-molding) surface resistance (Ro) ($R_1/R_0$).

In the description given below, the surface resistance change ($VR_1$) of a transparent conductive laminate during molding at a molding magnification of 2 may be referred to as "surface resistance change after 2-fold molding ($VR_1$)"; the surface resistance ($R_1$) measured after being molded at a molding magnification of 2 as "surface resistance after 2-fold molding ($R_1$)"; the initial (pre-molding) surface resistance ($R_0$) of a transparent conductive laminate as "initial surface resistance ($R_0$)"; and the haze value measured after being molded at a molding magnification of 2 as "haze value after 2-fold molding ($HZ_1$)".

When a transparent conductive laminate is molded into a hemisphere in order to be used, for example, for a touch panel having a curved surface (e.g., a hemispheric touch panel), the transparent conductive laminate will typically have an area of a large molding magnification (elongation) and an area of a small molding magnification. In other words, the molding magnification is relatively small at the central part of the hemisphere, and the molding magnification tends to increase with increasing distance from the central part. Thus, when a transparent conductive laminate is molded for a hemispheric touch panel, there will be areas having different molding magnifications in the touch panel.

When a transparent conductive laminate containing CNTs has a relatively small initial surface resistance ($R_0$) (e.g., $1.0 \times 10^4$ $\Omega/\square$ or less), its surface resistance generally increases as the molding magnification increases. When there is an area of a large molding magnification and an area of a small molding magnification in a hemispheric touch panel as described above, it means that there is an area of a large surface resistance and an area of a small surface resistance in the touch panel. In such a case where there is an area of a large surface resistance and an area of a small surface resistance in a touch panel, activation properties (activation sensitivity) will vary in the touch panel to result in unstable activation properties. This may result in an impaired function of the touch panel.

The present inventors studied to solve the problems described above to discover that a transparent conductive laminate that exhibits a surface resistance change after 2-fold molding ($VR_1$) of 8-fold or less solves the problems described above.

Thus, when a transparent conductive laminate exhibits a surface resistance change after 2-fold molding ($VR_1$) of 8-fold or less, it can be used as a touch panel having stable and excellent activation properties. If the surface resistance change after 2-fold molding ($VR_1$) is more than 8-fold, it is difficult to use the transparent conductive laminate as a touch panel due to unstable activation properties.

To produce a touch panel with even more excellent and more stable activation properties, the surface resistance change after 2-fold molding ($VR_1$) of the transparent conductive laminate is preferably 7-fold or less, more preferably 6-fold or less, and still more preferably 5-fold or less.

When a transparent conductive laminate is used in applications such as touch panels, electronic paper, and digitals signage, it is important that the surface resistance after 2-fold molding ($R_1$) be $1.0 \times 10^5$ $\Omega/\square$ or less. A surface resistance ($R_1$) of more than $1.0 \times 10^5$ $\Omega/\square$ significantly reduces activation properties of the touch panel.

To produce a touch panel having more excellent and more stable activation properties, the surface resistance after 2-fold molding ($R_1$) is preferably $1.0 \times 10^4$ $\Omega/\square$ or less, more preferably $5.0 \times 10^3$ $\Omega/\square$ or less.

In the present invention, to produce a transparent conductive laminate having a surface resistance after 2-fold molding ($R_1$) of $1.0 \times 10^5$ $\Omega/\square$ or less, the initial surface resistance ($R_0$) of the transparent conductive laminate is preferably $2.0 \times 10^3$ $\Omega/\square$ or less, more preferably $1.0 \times 10^3$ $\Omega/\square$ or less, and still more preferably $8.0 \times 10^2$ $\Omega/\square$ or less.

When the transparent conductive laminate of the present invention is used in applications such as touch panels, electronic paper, and digitals signage, to ensure high transparency, the haze value after 2-fold molding ($HZ_1$) is preferably 10% or less, more preferably 9% or less, still more preferably 8% or less, and particularly preferably 7% or less. The lower limit of the haze value is preferably as small as possible, but practically, the lower limit is about 0.5%.

When a transparent conductive laminate containing CNTs has a relatively small initial surface resistance ($R_0$) (e.g., $1.0 \times 10^4$ $\Omega/\square$ or less), its haze value generally increases as the molding magnification increases. This is presumably because molding causes cracks in the transparent conductive laminate. In other words, it is presumed that the size and the number of cracks increases as the molding magnification increases, leading to an increased haze value.

Furthermore, when cracks occur in the transparent conductive laminate, CNTs at the cracked part may be exposed, which may reduce the surface resistance. As described above, when a transparent conductive laminate is molded into a hemisphere in order to be used, for example, for a touch panel having a curved surface (e.g., a hemispheric touch panel), there is an area of a large molding magnification and an area of a small molding magnification in the hemispheric touch panel. When there is an area of a large molding magnification and an area of a small molding magnification in a touch panel, it means that there is an area of a large haze value and an area of a small haze value in the touch panel. In such a case where there is an area of a large haze value and an area of a small haze value in a touch panel, visibility (transparency and brightness) varies in the touch panel, which may result in unstable visibility.

Also from the above standpoint (the standpoint of producing a stable touch panel with good visibility), the haze value after 2-fold molding ($HZ_1$) is preferably 10% or less, more preferably 9% or less, and particularly preferably 8% or less, as described above.

Furthermore, from the above standpoint (the standpoint of producing a stable touch panel with good visibility), the ratio of the haze value after 2-fold molding ($HZ_1$) of the transparent conductive laminate to its initial (pre-molding) haze value ($HZ_0$) ($HZ_1/HZ_0$) is preferably 10 or less, more preferably 9 or less, and still more preferably 8 or less.

The initial haze value ($HZ_0$) of the transparent conductive laminate of the present invention is preferably 5% or less, more preferably 3% or less, and still more preferably 2% or less.

The molding magnification of a transparent conductive laminate for use in applications such as touch panels, electronic paper, and digitals signage is typically up to about 2-fold. Thus, the transparent conductive laminate can be widely used in these applications by controlling its surface resistance change after 2-fold molding ($VR_1$) and surface resistance after 2-fold molding ($R_1$).

The transparent conductive laminate of the present invention can be used even in the case of molding at a molding magnification of more than 2-fold or molding partially at a molding magnification of more than 2-fold. In such cases, the surface resistance change ($VR_1$) at a maximum molding magnification of more than 2-fold is preferably 8-fold or less.

On the other hand, the transparent conductive laminate of the present invention is preferably used in the case of molding at a molding magnification of 2-fold or less, and in this case, the surface resistance change at a molding magnification of 1.5-fold ($VR_2$) of the transparent conductive laminate is preferably 5-fold or less, more preferably 4-fold or less, and still more preferably 3-fold or less. The surface resistance at a molding magnification of 1.5-fold ($R_2$) is preferably $5.0 \times 10^3$ $\Omega/\square$ or less, more preferably $4.0 \times 10^3$ $\Omega/\square$ or less, and still more preferably $3.0 \times 10^3$ $\Omega/\square$ or less. The haze value at a molding magnification of 1.5-fold ($HZ_2$) of the transparent conductive laminate is preferably 9% or less, more preferably 8% or less, and still more preferably 7% or less.

The transparent conductive laminate having the properties as described above can be achieved using a transparent conductive laminate comprising a substrate comprising a thermoplastic resin A, and a layer laminated on one surface of the substrate, the layer having at least CNTs and a thermoplastic resin B. Details will be described below.

Thermoplastic Resin B

The thermoplastic resin B used in the present invention, to prevent rupture of CNTs during molding and the occurrence of cracks in a dispersant for CNTs, preferably has an elongation according to the molding magnification. In the case of a molding magnification of 2-fold, it is preferable to use a thermoplastic resin having an elongation of at least 1 to 2,000%, more preferably 100 to 2,000%, and still more preferably 300 to 2,000%. The elongation in this case is a value determined by the equation (1) below.

$$\text{Elongation (\%)} = [(\text{length at break - original length})/\text{original length}] \times 100 \quad (1)$$

In particular, thermoplastic resins comprising at least one selected from the group consisting of urethane resins, carbonate resins, ester resins, ether resins, acrylic resins, vinyl resins, and olefin resins are preferably used. In the case of urethane resins, for example, polyurethane resins, which are typically polymers obtained by copolymerization of polyol components and isocyanate components, are provided with high elongation and flexibility by the polyol components, and are provided with toughness and solvent resistance by urethane bonds formed by copolymerization of the polyol components and the isocyanate components. Thus, in the present invention, a resin may be used in which polyol components and isocyanate components are blended according to the molding magnification.

Examples of polyol components include polyether polyols and polyester polyols. Specific examples of polyether polyols include polyoxypropylene glycol and polyoxytetramethylene glycol, and specific examples of polyester polyols include polyester polyols obtained by polycondensation of a carboxylic acid, such as adipic acid or phthalic acid, and a polyhydric alcohol, such as ethylene glycol, 1,4-butanediol, or 1,6-hexanediol.

Examples of isocyanate components include aliphatic isocyanates and aromatic isocyanates, and specific examples thereof include tetramethylene diisocyanate, hexamethylene diisocyanate, tolylene diisocyanate, and diphenylmethane diisocyanate.

The presence of the thermoplastic resin B between CNTs can prevent rupture of the CNTs during molding and the occurrence of cracks in a dispersant for CNTs, and also can reduce the surface resistance change after molding (R). The thermoplastic resin B and the thermoplastic resin A may be the same or different. CNT

The CNT used in the present invention may be any CNT that substantially has a cylindrical shape formed by rolling a sheet of graphite, and either a single-walled CNT formed by rolling a sheet of graphite in one layer or a multi-walled CNT formed by rolling a sheet of graphite in multiple layers can be used. In particular, at least 50 out of 100 CNTs are preferably double-walled CNTs formed by rolling a sheet of graphite in two layers to provide extremely high conductivity and high CNT dispersibility in a dispersion liquid for coating. More preferably, at least 75 out of 100 CNTs are double-walled CNTs, and still more preferably, at least 80 out of 100 CNTs are double-walled CNTs. The state where 50 out of 100 CNTs are double-walled CNTs may also be expressed as the percentage of double-walled CNTs being 50%. Furthermore, the double-walled CNT is preferred also because its original function such as conductivity will not be impaired even when its surface is functionalized, for example, by acid treatment.

CNTs are prepared, for example, by the following procedures. In a vertical reactor, a powder catalyst of iron-supported magnesia is distributed over the whole reactor in the direction of a horizontal section, and methane is supplied vertically into the reactor to bring methane into contact with the catalyst at 500 to 1,200°C to thereby prepare CNTs. The CNTs are then subjected to oxidation treatment to obtain a CNT assembly containing single- to quintuple-walled CNTs. The CNT assembly prepared can be subjected to oxidation treatment to increase the percentage of single- to quintuple-walled CNTs, particularly, double- to quintuple-walled CNTs. The oxidation treatment is carried out, for example, by nitric acid treatment. Nitric acid is preferred because it acts as a dopant for CNTs. The dopant, which gives excess electrons to CNTs or takes electrons therefrom to form holes, generates a freely movable carrier to improve the conductivity of the CNTs. The nitric acid treatment may be carried out by any method as long as CNTs suitable for the present invention can be obtained, and it is typically carried out in an oil bath at 140°C. The nitric acid treating time, although not critical, is preferably in the range of 5 hours to 50 hours.

The average diameter of CNTs, although not critical, is preferably in the range of 1 to 10 nm, more preferably in the range of 1 to 5 nm. The average length of CNTs is preferably in the range of 2 to 7 $\mu$m, more preferably in the range of 3 to 6 $\mu$m.

To produce a transparent conductive laminate that exhibits a surface resistance change after 2-fold molding ($VR_1$) of 8-fold or less, it is preferable to use CNTs with an average length of 2 to 7 $\mu$m, and it is more preferable to use CNTs with an average length of 3 to 6 $\mu$m. Through the use of CNTs with such a preferred average length, the number of points of contact among CNTs is sufficiently ensured even at a molding magnification of 2, and the surface resistance change (R) can be reduced; furthermore, the stability of a coating solution can be increased due to good dispersibility of the CNTs.

The average length of CNTs in a dispersion liquid can be measured by spin-coating a smooth substrate with the dispersion liquid to prepare a sample (spin-coated film), and observing the CNTs in the spin-coated film, for example, by SEM. The average length of the CNTs can be determined by measuring the lengths of randomly-selected 30 CNTs and averaging the measurements.

Dispersant

Examples of dispersants for CNTs include surfactants and various polymeric materials (water-soluble polymeric materials), and in particular, ionic polymeric materials with high dispersibility are preferred. Examples of ionic polymeric materials include anionic polymeric materials, cationic polymeric materials, and amphoteric polymeric materials. Any type of such ionic polymeric material can be used as long as it has a high CNT-dispersing ability and is capable of retaining dispersibility, and anionic polymeric materials are preferred because they are excellent in dispersibility and dispersion-retention properties. In particular, carboxymethylcellulose and salts thereof (e.g., sodium salt and ammonium salt) and polystyrene sulfonic acid salts are preferred because they can efficiently disperse CNTs in a CNT dispersion liquid.

To improve the dispersibility of CNTs, the mass ratio of a dispersant to CNTs (the mass of a dispersant/the mass of CNTs) is preferably 0.3 or more, more preferably 0.5 or more. On the other hand, to provide high conductivity, the upper limit of the mass ratio is preferably not more than 10, more preferably not more than 9, still more preferably not more than 6, and particularly preferably not more than 3.

As described above, anionic polymeric materials (e.g., carboxymethylcellulose and salts thereof (e.g., sodium salt and ammonium salt), and polystyrene sulfonic acid salts) are preferably used as dispersants, but these dispersants can cause cracks in a transparent conductive laminate during molding the transparent conductive laminate. Thus, when an anionic polymeric material (in particular, carboxymethylcellulose and salts thereof) is used as a dispersant, the mass ratio of the dispersant to CNTs is preferably as small as possible in the range described above, and specifically, it is preferably 6 or less, more preferably 3 or less, and still more preferably 2 or less.

Dispersion medium

The dispersion medium used in the present invention is preferably water because, for example, it can safely dissolve the above-described dispersant, and waste liquids can be easily disposed of.

CNT Dispersion Liquid

The CNT dispersion liquid used in the present invention can be prepared by any method, for example, by the following procedure. To shorten the treating time at dispersion, it is preferable to once prepare a dispersion liquid of CNTs in a dispersion medium in the concentration range of 0.003 to 0.15% by mass, and then dilute the dispersion liquid to a predetermined concentration.

Examples of dispersion means in the preparation include mixing CNTs and a dispersant in a dispersion medium using a mixing and dispersing apparatus commonly used in the production of coating (e.g., a ball mill, a bead mill, a sand mill, a roll mill, a homogenizer, an ultrasonic homogenizer, a high-pressure homogenizer, an ultrasonic apparatus, an attritor, a dissolver, or a paint shaker). These mixing and dispersing apparatuses may be combined to perform dispersion stepwise. In particular, a method is preferred in which CNTs are preliminarily dispersed using a vibrating ball mill and then dispersed using an ultrasonic apparatus, because the CNTs will be dispersed well in the resulting dispersion liquid for coating.

Layer Laminated on Substrate

The layer laminated on a substrate contains at least CNTs and a thermoplastic resin B. To reduce the surface resistance change ($VR_1$) by effectively preventing rupture of CNTs and the occurrence of cracks during molding, the mass percentage of the thermoplastic resin B in the total mass of the thermoplastic resin B and the CNTs is preferably 10 to 99.5% by mass, more preferably 20 to 99.5% by mass.

Furthermore, to effectively prevent the occurrence of molding defects, easily achieve a desired surface resistance, and effectively prevent the increase in absorption of transmitted light due to excessive stacking of CNTs, the thickness of the layer laminated on a substrate is preferably 1 to 1,000 nm, more preferably 5 to 500 nm, and still more preferably 10 to 300 nm.

The layer laminated on a substrate may optionally contain, for example, UV absorbers, surface modifiers, and antioxidants.

Examples of the method of laminating CNTs and a thermoplastic resin B to a substrate comprising a thermoplastic resin A include (1) a method in which a coating solution containing CNTs and a thermoplastic resin B is applied to a substrate (one-step coating), and (2) a method in which a coating solution containing CNTs is applied to a substrate and dried, and then a coating solution containing a thermoplastic resin B is applied and dried (two-step coating).

The method (1) is a method in which a CNT dispersion liquid and a thermoplastic resin B are mixed in advance, and the mixed solution (coating solution) is laminated on a substrate. The method (2) is a method in which CNTs are laminated in advance, and then a thermoplastic resin B is laminated. For the selection of lamination methods, a preferred lamination method may be selected taking into account, for example, compatibility between the CNT dispersion liquid and the thermoplastic resin B used. For example, when the CNT dispersion solvent is water, while the solvent for the thermoplastic resin B is an organic solvent, mixing them will induce, for example, aggregation of CNTs and gelation during storage, and therefore, it is preferable to separately laminate the CNTs and the thermoplastic resin B. In contrast, when the solvents used are the same and cause no problem when mixed, it is preferable, in terms of cost, to mix them and laminate the CNTs and the thermoplastic resin B at one time.

Either in the case of lamination at one time or in the case of separate lamination, a resin layer may be further provided thereon if the CNTs may possibly be detached after the lamination. In this case, any type of resin may be used as long as no cracks occur during molding.

The lamination may be carried out by a known method, and examples of the method that can be used include, but are not limited to, gravure coating, slit-die coating, knife coating, kiss coating, roll coating, bar coating, spray coating, dip coating, spin coating, screen printing, ink-jet printing, pad printing, and other types of printing. An appropriate lamination method may be selected according to the properties of the CNTs and the thermoplastic resin B, the solvent and the substrate used, and preferred conditions.

Substrate

The substrate used in the present invention preferably comprises a thermoplastic resin A. The thermoplastic resin A may be any thermoplastic resin, and thermoplastic resins having high transmittance are preferably used in order to provide a transparent conductive laminate. Specifically, thermoplastic resins having a total light transmittance at a wavelength of 380 to 780 nm of 80% or more are preferred, and those having a total light transmittance at a wavelength of 380 to 780 nm of 90% or more are more preferred. Examples of such thermoplastic resins having high transmittance include polymethyl methacrylate, polycarbonate, cyclic olefin polymer, polyethylene terephthalate, polyvinyl chloride, polystyrene, triacetylcellulose, polyethylene, polypropylene, and polylactide. Among them, resins having good moldability, such as polymethyl methacrylate, polycarbonate, and cyclic olefin polymer, are preferred; polymethyl methacrylate and cyclic olefin polymer are more preferred; and cyclic olefin polymer is still more preferred.

From the standpoint of handleability and moldability, the thickness of the substrate is preferably 75 to 3,000 $\mu$m, more preferably 100 to 1,000 $\mu$m.

Furthermore, the substrate may optionally be subjected to surface treatment. The surface treatment may be a physical treatment, such as corona discharge, plasma treatment, glow discharge, or flame treatment, or coating with a resin layer. To laminate CNTs on the substrate, the substrate preferably has a pure water contact angle of 60° or less.

Furthermore, an adhesion-improving layer may be formed, and for example, additives such as antistatic agents, UV absorbers, plasticizers, lubricants, and fillers may be added without adversely affecting the effects of the present invention. The type of the substrate is not limited to those described above, and an optimal one can be selected according to the intended use in terms, for example, of transparency, durability, flexibility, and cost.

When the hardness of the substrate itself is low, flaws can occur on the surface opposite to the surface on which a conductive material is to be laminated. For example, flaws can occur due to contact with a conveying roll during conveyance in lamination of the conductive material, tight winding in winding up, and contact with a mold during molding. To prevent the occurrence of such flaws, a resin layer may be provided as a protective layer on the surface opposite to the surface on which the conductive material is to be laminated. The resin layer in this case may be any resin layer as long as it is hard enough to prevent the occurrence of flaws.

Molding

The transparent conductive laminate of the present invention can be formed by a molding method such as vacuum forming, air-pressure forming, vacuum-pressure forming which is a combination of vacuum forming and air-pressure forming, press forming, plug forming, laminate molding, in-mold molding, or insert molding. In the present invention, to control the molding magnification to be 2-fold, an appropriate molding method may be selected according to the properties of a thermoplastic resin A used in the substrate of the transparent conductive laminate, the properties of a thermoplastic resin B used in the layer laminated on the substrate, the thicknesses of the substrate and the layer laminated on the substrate, and the shape after molding.

Examples

The present invention will now be described in more detail with reference to the following examples, which, however, are not intended to limit the scope of the invention. The methods of measurement used in the examples will be described below.

Evaluation Method

(1) Molding

2-fold molding

Two parallel lines were drawn on a transparent conductive laminate with an oil-based ink pen, and another two lines perpendicular to these two lines were drawn in the same manner. The distance ($L_0$) between the two parallel lines were measured using a digital microscope VHX200 manufactured by Keyence Corporation. The transparent conductive laminate was then loaded in a vacuum forming machine (model Forming 300 manufactured by Seikosangyo Co., Ltd.), and the transparent conductive laminate was heated with a ceramic heater to around the glass transition temperature of a thermoplastic resin A of a substrate used in the transparent conductive laminate. Thereafter, a mold for 2-fold molding is pressed against the transparent conductive laminate, and molding was carried out by vacuum suction from the mold side. After the molding, the distance ($L_1$) between the two parallel lines was measured using the digital microscope VHX200 manufactured by Keyence Corporation, and the molding magnification (L) was calculated by the following equation (2).

$$L = L_1/L_0 \qquad (2)$$

1.5-fold molding

Molding was carried out in the same manner as described above except using a mold for 1.5-fold molding.

(2) Measurement of Surface Resistance

A four-point probe was brought into close contact with the central part of a rectangle outlined by the two parallel lines and the two lines perpendicular to these two lines drawn in order to measure a molding magnification, and a pre-molding initial surface resistance ($R_0$) was measured at room temperature by the four-terminal method. A surface resistance after 2-fold molding ($R_1$) and a surface resistance after 1.5-fold molding ($R_2$) were each measured at room temperature by the four-terminal method by bringing a four-point probe into close contact with the central part of the rectangle after being molded according to the method described in (1) above. The apparatus used for the measurement was a resistivity meter, model MCP-T360 manufactured by DIA Instruments Co., Ltd., and the probe used was a four-point probe MCP-TFP manufactured by DIA Instruments Co., Ltd.

(3) Calculation of Surface Resistance Changes ($VR_1$, $VR_2$)

From the initial surface resistance ($R_0$), the surface resistance after 2-fold molding ($R_1$), and the surface resist-

ance after 1.5-fold molding ($R_2$) obtained by the measurement in (2) above, a surface resistance change after 2-fold molding ($VR_1$) and a surface resistance change after 1.5-fold molding ($VR_2$) were calculated by the following equations (3) and (4).

$$\text{Surface resistance change after 2-fold molding } (VR_1) = R_1/R_0 \quad (3)$$

$$\text{Surface resistance change after 1.5-fold molding } (VR_2) = R_2/R_0 \quad (4)$$

(4) Measurement of Haze Value

An initial haze value of a transparent conductive laminate before molding ($HZ_0$), a haze value of a transparent conductive laminate after 2-fold molding ($HZ_1$), and a haze value of a transparent conductive laminate after 1.5-fold molding ($HZ_2$) were each measured using a turbidimeter "NDH-2000" manufactured by Nippon Denshoku Industries Co., Ltd. in accordance with JIS K 7136 (2000). In the measurements, the transparent conductive laminate was disposed such that light was incident on its CNT-containing layer side.
The transparent conductive laminate after 2-fold molding and the transparent conductive laminate after 1.5-fold molding used were those which were molded by the method described in (1) above.

(5) Measurement of Laminated Film Thickness

The laminated film thickness in one-step coating (Examples 1 to 3 and Comparative Examples 1 to 3) was determined by calculation from the solids concentration of a coating solution and the nominal wet coating amount of a coater (wire bar) with a specific gravity of the coating solution at 1.0 g/cm$^3$. The laminated film thickness in two-step coating (Examples 4 and 5, Comparative Example 4) was determined by cross-sectional observation of a laminated film of the transparent conductive laminate prepared. Specifically, observation was made at an accelerating voltage of 3.0 kV using a field-emission scanning electron microscope (JSM-6700-F manufactured by JEOL Ltd.). The cross-section of a sample was adjusted using a microtome. Thicknesses at five random points in the cross-sectional micrograph obtained were measured (calculated from the magnification) and averaged.

Catalyst Preparation Example: Support of Catalytic Metal Salt on Magnesia

Ferric ammonium citrate (available from Wako Pure Chemical Industries, Ltd.) was dissolved in methanol (available from Kanto Kagaku.), and magnesium oxide (MJ-30 available from Iwatani Chemical Industry Co., Ltd.) was added thereto. The resulting mixture was stirred with a stirrer, and the resulting suspension was concentrated to dryness at 40°C under reduced pressure. The powder obtained was dried by heating at 120°C to remove methanol, thereby obtaining a catalyst in which a metal salt was supported on magnesium oxide powder. The solid matter obtained was granulated with a mortar on a sieve to recover particles with a particle size in the range of 20 to 32 mesh (0.5 to 0.85 mm). This procedure was repeated, and the following experiment was performed.

Production Example of CNT Assembly: Synthesis of CNT Assembly

The reactor used is a cylindrical quartz tube with an inner diameter of 75 mm and a length of 1,100 mm, and equipped with a quartz sintered plate at the central part, a mixed gas-introduction tube, which is a supply line for inert gas and raw gas, at the lower part of the quartz tube, and a waste gas pipe at the upper part.
Furthermore, the reactor is equipped with three electric furnaces serving as heaters surrounding the circumference of the reactor so that the reactor can be kept at a certain temperature. In addition, the reactor is equipped with a thermocouple to detect the temperature in a reaction tube.
The solid catalyst prepared in Catalyst Preparation Example was introduced onto the quartz sintered plate at the central part of the vertically-disposed reactor to form a catalyst layer. While heating the catalyst layer until the temperature in the reaction tube reached about 860°C, nitrogen gas was supplied at 16.5 L/min from the bottom of the reactor toward the upper part thereof using a mass flow controller to pass through the catalyst layer. Thereafter, while supplying nitrogen gas, methane gas was further introduced at 0.78 L/min for 60 minutes using the mass flow controller to pass through the catalyst layer, and allowed to undergo reaction. In this reaction, the contact time obtained by dividing the mass of the solid catalyst by the flow rate of methane (W/F) was 169 min·g/L, and the linear velocity of the gas including methane was 6.55 cm/sec. The introduction of methane gas was stopped, and the quartz reaction tube was cooled to room temperature while supplying nitrogen gas at 16.5 L/min. The heating was stopped, and the reactor was left to stand to room temperature. After room temperature was reached, a CNT-containing composition containing catalyst and CNTs was taken out of the reactor.

Purification and Oxidation Treatment of CNT Assembly

The CNT-containing composition containing catalyst and CNTs obtained in Production Example of CNT Assembly was stirred in 2,000 mL of a 4.8 N aqueous hydrochloric acid solution for 1 hour to dissolve the catalytic metal iron and its carrier MgO. The black suspension obtained was filtered, and then the residue was poured again into 400 mL of a 4.8 N aqueous hydrochloric acid solution for de-MgO treatment and filtered. This procedure was repeated three times (de-MgO treatment). Thereafter, after washing with ion-exchanged water until the suspension of the residue became neutral, the CNT-containing composition was stored in the wet state containing water.

To the CNT-containing composition in the wet state, concentrated nitric acid (available from Wako Pure Chemical Industries, Ltd., extra-pure, Assay 60 to 61% by mass) was added in a mass about 300 times the dry mass content of the CNT-containing composition. Thereafter, in an oil bath at about 140°C, the resulting mixture was heated to reflux with stirring for 25 hours. After the heating to reflux, the nitric acid solution containing the CNT-containing composition was 3-fold diluted with ion-exchanged water and suction-filtered. After washing with ion exchanged water until the suspension of the residue became neutral, a CNT assembly in the wet state containing water was obtained.

Preparation of CNT Dispersion Liquid

CNT Dispersion Liquid (1)

The CNT assembly in the wet state obtained, an aqueous solution of 6% by mass of sodium carboxymethylcellulose (available from Dai-Ichi Kogyo Seiyaku Co., Ltd., "CELLOGEN" (registered trademark) 5A (mass average molecular weight: 80,000)) (dispersant/CNT mass ratio = 2.5), ion-exchanged water, and zirconia beads (available from Toray Industries, Inc., "Torayceram" (registered trademark), bead size: 0.8 mm) were added into a container, and a 28% by mass aqueous ammonia solution (available from Kishida Chemical Co., Ltd.) was used to adjust the pH to 10. This container was shaken for 2 hours using a vibratory ball mill (manufactured by Irie Shokai Co., Ltd., VS-1, vibration frequency: 1,800 cpm (60 Hz)) to prepare a CNT paste.

This CNT paste was then diluted with ion exchanged water to a CNT concentration of 0.15% by mass, and to 10 g of the diluent, the 28% by mass aqueous ammonia solution was added again to adjust the pH to 10. The resulting aqueous solution was subjected to dispersion treatment under ice-cooling using an ultrasonic homogenizer (manufactured by Ieda Trading Corporation, VCX-130) at an output power of 20 W for 1.5 min (0.6 kW·min/g). During the dispersion, the liquid temperature was maintained at 10°C or lower. The resulting solution was centrifuged at 10,000 G for 15 minutes using a high-speed centrifuge (Tomy Seiko Co., Ltd., MX-300) to obtain a CNT dispersion liquid. Thereafter, water was added to the CNT dispersion liquid such that the final concentration of the CNT assembly was 0.06% by mass. The average length of CNTs was 4.0 μm.

CNT Dispersion Liquid (2)

The CNT assembly in the wet state obtained, an aqueous solution of 6% by mass of sodium carboxymethylcellulose (available from Dai-Ichi Kogyo Seiyaku Co., Ltd., "CELLOGEN" (registered trademark) 5A (mass average molecular weight: 80,000)) (dispersant/CNT mass ratio = 1.2), ion-exchanged water, and zirconia beads (available from Toray Industries, Inc., "Torayceram" (registered trademark), bead size: 0.8 mm) were added into a container, and a 28% by mass aqueous ammonia solution (available from Kishida Chemical Co., Ltd.) was used to adjust the pH to 10. This container was shaken for 2 hours using a vibratory ball mill (manufactured by Irie Shokai Co., Ltd., VS-1, vibration frequency: 1,800 cpm (60 Hz)) to prepare a CNT paste.

This CNT paste was then diluted with ion exchanged water to a CNT concentration of 0.15% by mass, and to 10 g of the diluent, the 28% by mass aqueous ammonia solution was added again to adjust the pH to 10. The resulting aqueous solution was subjected to dispersion treatment under ice-cooling using an ultrasonic homogenizer (manufactured by Ieda Trading Corporation, VCX-130) at an output power of 20 W for 1.5 min (0.6 kW·min/g). During the dispersion, the liquid temperature was maintained at 10°C or lower. The resulting solution was centrifuged at 10,000 G for 15 minutes using a high-speed centrifuge (Tomy Seiko Co., Ltd., MX-300) to obtain a CNT dispersion liquid. Thereafter, water was added to the CNT dispersion liquid such that the final concentration of the CNT assembly was 0.06% by mass. The average length of CNTs was 4.0 μm.

Corona Treatment

Using corona surface modification test equipment TEC-4AX manufactured by Kasuga Denki, Inc., a substrate was placed on a ground plate and corona treated under the following conditions: corona treatment output: 100 W, discharge gap from ceramic electrode: 1 mm, electrode moving speed: 6 m/min, treatment time: 5.

Example 1

The CNT dispersion liquid (1) and a urethane resin A (available from Dai-Ichi Kogyo Seiyaku Co., Ltd., "ELASTRON" (registered trademark) E-37) were mixed such that the amount of the urethane resin A based on the total amount of the urethane resin A and CNTs was 30% by mass to prepare a coating solution. This coating solution was applied to the surface of a cyclic olefin polymer resin film (available from Zeon Corporation, "ZeonorFilm" (registered trademark) ZF14-100), which had been corona treated by the method described above, using a wire bar such that its dry thickness would be 10 nm, and dried until the solvent contained volatilized to obtain the transparent conductive laminate of the present invention.
The transparent conductive laminate obtained was then molded by the molding method described above to obtain a molded body.

Example 2

The CNT dispersion liquid (1) and a urethane resin B (available from Sanyo Chemical Industries, Ltd., "PERMARIN" (registered trademark) UA-310) were mixed such that the amount of the urethane resin B based on the total amount of the urethane resin B and CNTs was 50% by mass to prepare a coating solution. This coating solution was applied to the surface of a polymethyl methacrylate resin film (available from Sumitomo Chemical Co., Ltd., "TECHNOLLOY" (registered trademark) S001G), which had been corona treated by the method described above, using a wire bar such that its dry thickness would be 15 nm, and dried until the solvent contained volatilized to obtain the transparent conductive laminate of the present invention.
The transparent conductive laminate obtained was then molded by the molding method described above to obtain a molded body.

Example 3

The same procedure as in Example 1 was repeated except using the CNT dispersant (2) to obtain a transparent conductive laminate, which was molded by the molding method described above to obtain a molded body.

Example 4

The CNT dispersion liquid (1) was applied to the surface of a cyclic olefin polymer resin film (available from Zeon Corporation, "ZeonorFilm" (registered trademark) ZF14-100), which had been corona treated by the method described above, using a wire bar, and dried until the solvent contained volatilized. Further thereto, a coating solution obtained by diluting a urethane resin C (available from Dai-Ichi Kogyo Seiyaku Co., Ltd., "SUPERFLEX" (registered trademark) 150) with methyl ethyl ketone such that the solids concentration was 5% by mass was applied using a wire bar, and dried until the solvent contained volatilized to obtain the transparent conductive laminate of the present invention. The thicknesses of the coating layers were adjusted such that the amount of the urethane resin C was 90% by mass based on the total mass of CNTs and the urethane resin C.
The transparent conductive laminate obtained was then molded by the molding method described above to obtain a molded body.

Example 5

The same procedure as in Example 4 was repeated except using the CNT dispersant (2) to obtain a transparent conductive laminate, which was molded by the molding method described above to obtain a molded body.

Comparative Example 1

The CNT dispersion liquid (1) was applied to the surface of a cyclic olefin polymer resin film (available from Zeon Corporation, "ZeonorFilm" (registered trademark) ZF14-100), which had been corona treated by the method described above, using a wire bar such that its dry thickness would be 5 nm, and dried until the solvent contained volatilized to obtain a transparent conductive laminate.

The transparent conductive laminate obtained was then molded by the molding method described above to obtain a molded body.

Comparative Example 2

The CNT dispersion liquid (1) and a urethane resin A (available from Dai-Ichi Kogyo Seiyaku Co., Ltd., "ELASTRON" (registered trademark) E-37) were mixed such that the amount of the urethane resin A based on the total amount of the urethane resin A and CNTs was 5% by mass to prepare a coating solution. This coating solution was applied to the surface of polyethylene terephthalate (available from Toray Industries, Inc., "Lumirror" (registered trademark) U46), which had been corona treated by the method described above, using a wire bar such that its dry thickness would be 15 nm, and dried until the solvent contained volatilized to obtain a transparent conductive laminate.

The transparent conductive laminate obtained was then molded by the molding method described above to obtain a molded body.

Comparative Example 3

The CNT dispersion liquid (1) and dipentaerythritol hexaacrylate (hereinafter referred to as DPHA) (available from Kyoeisha Chemical Co., Ltd., LIGHT ACRYLATE DPE-6A) were mixed such that the amount of DPHA based on the total amount of DPHA and CNTs was 90% by mass to prepare a coating solution. This coating solution was applied to the surface of a cyclic olefin polymer resin film (available from Zeon Corporation, "ZeonorFilm" (registered trademark) ZF14-100), which had been corona treated by the method described above, using a wire bar such that its dry thickness would be 100 nm, dried until the solvent contained volatilized, and cured using a UV irradiator to obtain a transparent conductive laminate.

The transparent conductive laminate obtained was then molded by the molding method described above to obtain a molded body.

Comparative Example 4

The CNT dispersion liquid (2) was applied to the surface of a cyclic olefin polymer resin film (available from Zeon Corporation, "ZeonorFilm" (registered trademark) ZF14-188), which had been corona treated by the method described above, using a wire bar, and dried until the solvent contained volatilized. Further thereto, a coating solution obtained by diluting DPHA with methyl ethyl ketone such that the solids concentration was 2% by mass was applied using a wire bar, and dried until the solvent contained volatilized to obtain a transparent conductive laminate. The thicknesses of the coating layers were adjusted such that the amount of DPHA was 90% by mass based on the total mass of CNTs and DPHA.

The transparent conductive laminate obtained was then molded by the molding method described above to obtain a molded body.

Evaluation

For the transparent conductive laminates and the molded bodies prepared in Examples and Comparative Examples above, the pre-molding initial surface resistance ($R_0$), the pre-molding initial haze value ($HZ_0$), the surface resistance after 2-fold molding ($R_1$), the surface resistance after 1.5-fold molding ($R_2$), the surface resistance change after 2-fold molding ($VR_1$), the surface resistance after 1.5-fold molding ($VR_2$), the haze value after 2-fold molding ($HZ_1$), and the haze value after 1.5-fold molding ($HZ_2$) were each measured. The results are shown in Table 1 and Table 2.

[Table 1]

| | Substrate | Substrate film thickness (μm) | Resin | CNT dispersion liquid | Content of resin (mass%) | Coating | Lamination thickness (nm) | Molding magnification |
|---|---|---|---|---|---|---|---|---|
| Example 1 | Cyclic olefin | 100 | Urethane resin A | Dispersion liquid (1) | 30 | Once | 10 | 2-fold |
| Example 2 | Polymethylmethacrylate | 125 | Urethane resin B | Dispersion liquid (1) | 50 | Once | 15 | 2-fold |
| Example 3 | Cyclic olefin | 100 | Urethane resin A | Dispersion liquid (2) | 30 | Once | 10 | 2-fold |
| Example 4 | Cyclic olefin | 100 | Urethane resin C | Dispersion liquid (1) | 90 | Twice | 150 | 2-fold |
| Example 5 | Cyclic olefin | 100 | Urethane resin C | Dispersion liquid (2) | 90 | Twice | 150 | 2-fold |
| Comparative Example 1 | Cyclic olefin | 100 | - | Dispersion liquid (1) | 0 | Once | 5 | 2-fold |
| Comparative Example 2 | Polyethylene terephthalate | 100 | Urethane resin A | Dispersion liquid (1) | 5 | Once | 15 | 2-fold |
| Comparative Example 3 | Cyclic olefin | 100 | DPHA | Dispersion liquid (1) | 90 | Once | 100 | 2-fold |
| Comparative Example 4 | Cyclic olefin | 100 | DPHA | Dispersion liquid (2) | 90 | Twice | 50 | 2-fold |

[Table 2]

| | Initial Surface resistance $R_0$ ($\Omega/\square$) | Surface resistance after 2-fold molding $R_1$ ($\Omega/\square$) | Surface resistance change after 2-fold molding $VR_1$ | Surface resistance after 1.5-fold molding $R_2$ ($\Omega/\square$) | Surface resistance change after 1.5-fold molding $VR_2$ | Initial Haze $HZ_0$(%) | Haze after 2-fold molding $HZ_1$ (%) | Haze after 1.5-fold molding $HZ_2$ (%) |
|---|---|---|---|---|---|---|---|---|
| Example 1 | 330 | 2,650 | 8-fold | 1,224 | 3.7-fold | 0.8 | 8.5 | 3.7 |
| Example 2 | 690 | 3,610 | 5.2-fold | 1,932 | 2.8-fold | 0.9 | 7.8 | 3.8 |
| Example 3 | 500 | 2,500 | 5-fold | 1,150 | 2.3-fold | 0.8 | 6.8 | 3.4 |
| Example 4 | 500 | 2,000 | 4-fold | 1,100 | 2.2-fold | 1.1 | 6.3 | 3.3 |
| Example 5 | 500 | 1,000 | 2-fold | 850 | 1.7-fold | 1.0 | 6.0 | 3.0 |
| Comparative Example 1 | 500 | 20,000 | 40-fold | 13,500 | 27-fold | 1.5 | 15.0 | 8.3 |
| Comparative Example 2 | 250 | over $10^5$ | over 400-fold | 50,000 | 200-fold | 1.1 | 13.0 | 7.5 |
| Comparative Example 3 | 1,000 | over $10^5$ | over 100-fold | 53,000 | 53-fold | 1.0 | 19.0 | 8.0 |
| Comparative Example 4 | 800 | over $10^5$ | over 125-fold | 65,600 | 82-fold | 1.1 | 16.0 | 7.9 |

In the column of "Coating method" in Table 1, "Once" means one-step coating, and "Twice" means two-step coating.

Table 1 and Table 2 show that in Examples 1 to 5 according to the present invention, in all of which the substrate comprised a thermoplastic resin and the layer laminated on the substrate comprised a thermoplastic resin B, the surface resistance change after molding (R) was reduced.

On the other hand, in Comparative Example 1, in which the layer laminated on the substrate did not comprise a thermoplastic resin B and was made only of CNTs and a dispersant, the surface resistance change after molding ($VR_1$) was significant due to rupture of CNTs and the occurrence of cracks. In Comparative Example 2, in which the layer laminated on the substrate comprised a thermoplastic resin B but in a relatively small amount, the surface resistance change after molding ($VR_1$) was significant. Furthermore, in Comparative Example 3 and Comparative Example 4, in which DPHA with low elongation was used in place of the thermoplastic resin B, the moldability was poor, and the surface resistance after 2-fold molding ($R_1$) could not be measured by the measuring method described above. Description of Symbols

1: Substrate

2: Carbon nanotubes

3: Thermoplastic resin B

4: Layer laminated on substrate

## Claims

1. A transparent conductive laminate, comprising:

    a substrate comprising a thermoplastic resin A; and
    a layer laminated on one surface of the substrate, the layer having at least carbon nanotubes and a thermoplastic resin B, wherein the transparent conductive laminate undergoes a surface resistance change ($VR_1$) of 8-fold or less during molding at a molding magnification of 2, and has a surface resistance ($R_1$), as measured after being molded at a molding magnification of 2, of $1.0 \times 10^5$ Ω/□ or less.

2. The transparent conductive laminate according to claim 1, having a haze value, as measured after being molded at a molding magnification of 2, of 10% or less.

3. The transparent conductive laminate according to claim 1 or 2, wherein the percentage of the mass of the thermoplastic resin B relative to the total mass of the thermoplastic resin B and the carbon nanotubes is 10 to 99.5% by mass.

4. The transparent conductive laminate according to any one of claims 1 to 3, wherein the thermoplastic resin B is at least one selected from the group consisting of urethane resins, carbonate resins, ester resins, ether resins, acrylic resins, vinyl resins, and olefin resins.

5. The transparent conductive laminate according to any one of claims 1 to 4, wherein the thermoplastic resin A is polymethyl methacrylate or cyclic olefin polymer.

6. The transparent conductive laminate according to any one of claims 1 to 5, wherein the carbon nanotubes has an average length of 2 to 7 μm.

7. The transparent conductive laminate according to any one of claims 1 to 6, wherein the layer laminated on the substrate comprising the thermoplastic resin A has a thickness of 1 to 1,000 nm.

8. The transparent conductive laminate according to any one of claims 1 to 7, wherein the substrate comprising the thermoplastic resin A has a thickness of 75 to 3,000 μm.

[Fig. 1]

## INTERNATIONAL SEARCH REPORT

| International application No. |
| --- |
| PCT/JP2013/073477 |

A. CLASSIFICATION OF SUBJECT MATTER
*G06F3/041(2006.01)i*

According to International Patent Classification (IPC) or to both national classification and IPC

B. FIELDS SEARCHED

Minimum documentation searched (classification system followed by classification symbols)
G06F3/041

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2005-81766 A (Mitsubishi Rayon Co., Ltd.), 31 March 2005 (31.03.2005), paragraphs [0059] to [0064], [0085] to [0087], [0096] to [0097], [0104] to [0107], [0119], [0125] to [0126], [0134] to [0135] (Family: none) | 1-8 |

☐ Further documents are listed in the continuation of Box C.   ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    20 November, 2013 (20.11.13) | Date of mailing of the international search report<br>    03 December, 2013 (03.12.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012066580 A
- JP 2006035772 A
- JP 2011213843 A